(19) Europäisches Patentamt
European Patent Office
Office européen des brevets

(11) **EP 2 261 474 B1**

(12) **EUROPEAN PATENT SPECIFICATION**

(45) Date of publication and mention
of the grant of the patent:
**18.01.2012 Bulletin 2012/03**

(51) Int Cl.:
***F01N 3/02*** *(2006.01)*       ***F02D 45/00*** *(2006.01)*

(21) Application number: **08872422.4**

(22) Date of filing: **19.12.2008**

(86) International application number:
**PCT/JP2008/003867**

(87) International publication number:
**WO 2009/101667 (20.08.2009 Gazette 2009/34)**

(54) **EXHAUST GAS COLLECTING PERFORMANCE JUDGING METHOD AND DEVICE THEREFOR**

VERFAHREN ZUR BEURTEILUNG DER ABGASAUFFANGLEISTUNG UND VORRICHTUNG DAFÜR

PROCÉDÉ DE DÉTERMINATION DE PERFORMANCE DE COLLECTE DE GAZ D'ÉCHAPPEMENT ET DISPOSITIF POUR CELUI-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.02.2008   JP 2008032989**
**11.06.2008   JP 2008153053**

(43) Date of publication of application:
**15.12.2010   Bulletin 2010/50**

(73) Proprietor: **Honda Motor Co., Ltd.**
**Minato-ku**
**Tokyo 107-8556 (JP)**

(72) Inventors:
• **SATO, Daisuke**
**Wako-shi**
**Saitama 351-0193 (JP)**
• **MAKI, Hidetaka**
**Wako-shi**
**Saitama 351-0193 (JP)**
• **GOSYO, Eisaku**
**Wako-shi**
**Saitama 351-0193 (JP)**
• **IZUMIURA, Atsushi**
**Wako-shi**
**Saitama 351-0193 (JP)**
• **IIDA, Jun**
**Wako-shi**
**Saitama 351-0193 (JP)**

(74) Representative: **Prechtel, Jörg et al**
**Weickmann & Weickmann**
**Patentanwälte**
**Postfach 86 08 20**
**81635 München (DE)**

(56) References cited:
**JP-A- 2003 155 920     JP-A- 2003 166 411**
**JP-A- 2007 023 792     JP-A- 2007 247 550**
**JP-A- 2007 292 013     JP-A- 2007 292 013**

**Description**

BACKGROUND OF THE INVENTION

Technical Field

The present invention relates to an exhaust gas collecting performance determining (judging) method which determines a particulate collecting performance in exhaust gas by a filter unit provided in an exhaust system of an internal combustion engine, and a device therefor.

Description of the Related Art

Conventionally, there is known a technology of collecting particulates contained in an exhaust gas and reducing the amount of emission thereof, by a filter unit provided in an exhaust system of an internal combustion engine.

In the filter unit, if the particulates are excessively collected and abnormal combustion of the particulates occurs, there is a possibility that the filter unit is deteriorated from the melting or mechanical damage of the filter unit. As a result, there is a possibility that the particulates are not collected by the filter unit and is flown out therefrom, so that the amount of emission of the particulates increases. Further, in the filter unit, in the case where substances inhibiting ventilation of the filter unit (for example, ash) are collected, and such substances are accumulated without being removed from the filter unit even by performing regeneration treatment to the filter unit so that the filter unit is blocked, the pressure loss when the exhaust gas is emitted from the exhaust gas emission side becomes excessive.

Conventionally, for detecting the abnormality of the filter unit as explained above, there is known an exhaust gas collecting performance determining device equipped with a pressure difference detecting unit which detects a before-after pressure difference of the filter unit, and a determining unit which determines abnormality of the filter unit from the relationship between the detected before-after pressure difference and an operating condition of the internal combustion engine at the time when the before-after pressure difference is detected.

For example, there is known a device which detects that the filter unit is blocked, by comparing the exhaust gas flow rate of the internal combustion engine and the pressure loss of the filter unit as the operating condition of the interval combustion engine (for example refer to Japanese Patent Laid-Open S57-159519 or EP1849972). However, according to the exhaust gas collecting performance determining device of the above-mentioned document, because the exhaust gas flow rate of the internal combustion engine and the pressure loss of the filter unit greatly varies during operation of the internal combustion engine, there is a problem that the determination accuracy is low if the exhaust gas flow rate of the internal combustion engine and the pressure loss of the filter unit is compared only once.

Further, as the one dissolving the problems of the exhaust gas collecting performance determining device disclosed in the above-identified document, there is known an exhaust gas collecting performance determining device which determines that the filter unit is deteriorated or is blocked, from the relationship between an average values of the before-after pressure difference and an average value of the operating condition of the internal combustion engine in a predetermined operating period of the internal combustion engine (for example, refer to Japanese Patent Laid-Open 2003-155920). However, in the exhaust gas collecting performance determining device of the above-identified document, there is a disadvantage that the determination accuracy becomes lower, in the case where the average value of the before-after pressure difference and the average value of the operating condition are obtained during when the operating condition of the internal combustion engine is disproportionate.

SUMMARY OF THE INVENTION

In view of the above circumstances, an object to be solved by the present invention is to provide an exhaust gas collecting performance determining method eliminating the above-mentioned disadvantages, and which is capable of determining particulate collecting performance in an exhaust gas by a filter unit provided in an exhaust system of an internal combustion engine with good accuracy, and a device therefor.

In order to achieve such object, there is provided an exhaust gas collecting performance determining method for determining a particulate collecting performance in an exhaust gas by a filter unit provided in an exhaust system of an internal combustion engine, comprising: detecting a before-after pressure difference of the filter unit; memorizing a predetermined number of the detected before-after pressure difference in each region of an operating region sectionalized into a plurality of regions by an operating condition of the internal combustion engine; calculating a pressure difference characteristics of the filter unit with respect to the operating state of the internal combustion engine, when the predetermined number of the before-after pressure difference is memorized in all of the regions, on the basis of the relationship between the memorized before-after pressure difference and the operating condition at the time when each of the before-after pressure difference is detected, and determining an existence or nonexistence of an abnormality of the filter unit on the basis of the calculated pressure difference characteristics.

The exhaust gas collecting performance determining method of the present invention, in determining the existence or nonexistence of the abnormality of the filter unit, may calculate an approximate equation of a pressure difference characteristics of the filter unit with respect to the operating state of the internal combustion engine, on the basis of the relationship between the memorized before-after pressure difference and the operating condition of the internal combustion engine at the time when each of the before-after pressure difference is detected. Further, it may determine that the filter unit is abnormal in the case where a gradient of the calculated approximate equation is out of a predetermined range. Still further, it may determine that the filter unit is deteriorated, in the case where the calculated gradient of the approximate equation is smaller than a lower limit value of the predetermined range. Still further, it may determine that the filter unit is blocked, in the case where the calculated gradient of the approximate equation is larger than an upper limit value of the predetermined range. Still further, it may be configured to calculate an accumulation amount of the particulates accumulated at the filter unit on the basis of the operating condition of the internal combustion engine, and to correct the predetermined range to a side in which the gradient of the approximate equation is larger when the calculated accumulation amount is large.

Further, in the exhaust gas collecting performance determining method of the present invention, an exhaust gas flow rate of the internal combustion engine may be used, for example, as the operating condition of the internal combustion engine.

Further, the exhaust gas collecting performance determining method of the present invention may be configured so that the particulate accumulation amount accumulated at the filter unit is estimated on the basis of the operating state of the internal combustion engine, and deleting at least a part of the memorized before-after pressure difference, during when the before-after pressure difference is memorized in each of the regions, in the case where an amount of change of the estimated particulate accumulation amount exceeds a predetermined value. Moreover, the exhaust gas collecting performance determining method of the present invention may be configured so that the amount of change of the particulate accumulation amount is, taking the particulate accumulation amount estimated at the time when the before-after pressure difference is first memorized in any one of the regions as a particulate initial accumulation amount, a difference from the particulate initial accumulation amount.

The exhaust gas collecting performance detecting method of the present invention may be implemented advantageously by an exhaust gas collecting performance determining device for determining a particulate collecting performance in an exhaust gas by a filter unit provided in an exhaust system of an internal combustion engine, comprising: a pressure difference detecting unit which detects a before-after pressure difference of the filter unit; a memory unit which memorizes a predetermined number of the detected before-after pressure difference by the detecting unit in each region of an operating region sectionalized into a plurality of regions by an operating condition of the internal combustion engine;

and a determining unit which calculates a pressure difference characteristics of the filter unit with respect to the operating state of the internal combustion engine, when the predetermined number of the before-after pressure difference is memorized in all of the regions by the memory unit, on the basis of the relationship between the memorized before-after pressure difference and the operating condition at the time when each of the before-after pressure difference is detected, and determines the existence or nonexistence of an abnormality of the filter unit on the basis of the calculated pressure difference characteristics.

According to the exhaust gas collecting performance determining device of the present invention, first, the before-after pressure difference of the filter unit, that is, the pressure difference between the exhaust gas inflow side and the exhaust gas outflow side of the filter unit, is detected by the pressure difference detecting unit. Next, a predetermined number of the before-after pressure difference detected by the pressure difference detecting unit is memorized in each region of the operating region sectionalized into a plurality of regions by the operating condition of the internal combustion engine by the memory unit.

The before-after pressure difference of the filter unit may be regarded as being proportional to the operating conditions such as the exhaust gas flow rate from the filter unit and the intake air flow rate to the filter unit of the internal combustion engine. Therefore, next, the determining unit calculates the pressure difference characteristics of the filter unit which is regarded as being proportional to the operating condition of the internal combustion engine, when the predetermined number of the before-after pressure difference is memorized in all of the regions by the memory unit, on the basis of the relationship between the memorized before-after pressure difference and the operating condition at the time when each of the before-after pressure difference is detected. Next, the determining unit determines the existence or nonexistence of the abnormality of the filter unit, on the basis of the calculated pressure difference characteristics of the filter unit.

According to the exhaust gas collecting performance determining device of the present invention, the predetermined number of the before-after pressure difference detected by the pressure difference detecting unit are memorized by the memory unit in each of the regions of the operating region sectionalized into a plurality of regions by the operating condition of the internal combustion engine, so that the before-after pressure difference may be sampled without bias for the whole region of the operating condition of the internal combustion engine. Therefore, according to the present invention, it becomes possible to determine the particulate collecting ability in the exhaust gas by the filter unit provided in the exhaust system of the internal combustion engine with good accuracy.

In the exhaust gas collecting performance determining device of the present invention, the number of the before-after pressure difference to be memorized in each region by the memory unit may be equal in all regions, or may be different in each region.

Further, in the exhaust gas collecting performance determining device of the present invention, in calculating the pressure difference characteristics on the basis of the relationship between the memorized before-after pressure difference and the operating condition, all of the memorized before-after pressure difference may be used, or a part of the memorized before-after pressure difference, for example by deleting the minimum value and the maximum value therefrom, may be used.

In the exhaust gas collecting performance determining device of the present invention, the determining unit calculates an approximate equation of the pressure difference characteristics of the filter unit which is regarded as being proportional to the operating state of the internal combustion engine, from the relationship between, for example, the memorized before-after pressure difference and the operating condition at the time when each of the before-after pressure difference is detected, and determines that the filter unit is abnormal in the case where a gradient of the calculated approximate equation is out of a predetermined range. At this time, the determining unit may determine that the filter unit is deteriorated, in the case where the gradient of the calculated approximate equation is smaller than a lower limit value of the predetermined range. Further, the determining unit may determine that the filter unit is blocked, in the case where the gradient of the calculated approximate equation is larger than the upper limit value of the predetermined range, and also combine the same with the determination that the filter unit is deteriorated in the case where the gradient of the approximate equation is smaller than the lower limit value of the predetermined range.

It is known that when the accumulation amount of the particulates accumulated at the filter unit increases, the before-after pressure difference increases. As such, in the exhaust gas collecting performance determining device of the present invention, the determining unit may calculate the accumulation amount of the particulates accumulated at the filter unit on the basis of the operating condition of the internal combustion engine, and correct the predetermined range to a side in which the gradient of the approximate equation is larger when the calculated accumulation amount is large. According to the present invention equipped with such determining unit, the existence or nonexistence of the abnormality of the filter unit may be determined with good accuracy, even in the case where the accumulated amount of the particulates accumulated at the filter unit is increased.

Further, the operating condition of the internal combustion engine may be any amount as long as it is an amount related to the before-after pressure difference, and the exhaust gas flow rate of the internal combustion engine for example may be used.

In the exhaust gas collecting performance determining device of the present invention, it is conceivable that the particulate collecting ability of the filter unit may not be determined with good accuracy, in the case where the particulate accumulation amount at the filter unit varies greatly during the determination of the particulate collecting ability.

Therefore, the exhaust gas collecting performance detecting device of the present invention may further, comprise an accumulation amount estimating unit which estimates the particulate accumulation amount accumulated at the filter unit on the basis of the operating state of the internal combustion engine, and a reset unit which deletes at least a part of the memorized before-after pressure difference, in the case where an amount of change of the particulate accumulation amount estimated by the accumulation amount estimating unit exceeds a predetermined value during when the before-after pressure difference is memorized in each of the regions by the memory unit.

According to the present invention equipped with the accumulation amount estimating unit and the reset unit, the accumulation amount estimating unit estimates the particulate accumulation amount accumulated at the filter unit on the basis of the operating state of the internal combustion engine. Then, when the before-after pressure difference detected by a pressure difference detecting unit is memorized in each region by the memory unit, in the case where the amount of change of the particulate accumulation amount estimated by the accumulation amount estimating unit exceeds a predetermined value, the reset unit deletes at least a part of the memorized before-after pressure difference. At this time, the reset unit may delete a part of the memorized before-after pressure difference, or may delete all of the memorized before-after pressure difference. Thereafter, the pressure difference detecting unit detects the before-after pressure difference again, and the before-after pressure difference detected again is stored in each region by the memory unit.

Therefore, according to the exhaust gas collecting performance determining device of the present invention equipped with the accumulation amount estimating unit and the reset unit, the particulate collecting performance of the filter unit may be determined with good accuracy, even in the case where the particulate accumulation amount at the filter unit greatly varies during determination of the particulate collecting performance.

Further, in the exhaust gas collecting performance determining device of the present invention equipped with the accumulation amount estimating unit and the reset unit, the amount of change of the particulate accumulation amount may be, taking the particulate accumulation amount estimated by the accumulation amount estimating unit at the time when the before-after pressure difference is first memorized in any one of the regions by the memory unit as a particulate initial accumulation amount, a difference from the particulate initial accumulation amount.

Brief Description of the Drawings

FIG 1 is a view showing a configuration of an internal combustion engine provided with a filter related to a DPF exhaust gas collecting performance determining device of a first embodiment of the present invention and a control device therefor;

FIG 2 is a flowchart showing an operation of the exhaust gas collecting performance determining device shown in FIG 1;

FIG 3 is a graph showing a relationship between an exhaust gas volumetric flow rate of the engine and a DPF before-after pressure difference;

FIG 4 is a graph showing a determining method of the exhaust gas collecting performance determining device shown in FIG 1;

FIG 5 is a graph showing a relationship between the exhaust gas volumetric flow rate of the engine and the DPF before-after pressure difference;

FIG 6 is a view showing a configuration of the internal combustion engine provided with a filter related to a DPF exhaust gas collecting performance determining device according to a second embodiment of the present invention and a control device therefor;

FIG. 7 is a flowchart showing an operation of the exhaust gas collecting performance determining device shown in FIG 6;

FIG. 8 is a flowchart showing the operation of the exhaust gas collecting performance determining device shown in FIG 6; and

FIG 9 is a graph showing a relationship between the exhaust gas volumetric flow rate of the engine and the DPF before-after pressure difference.

Explanation of references

| 1, 31 | exhaust gas collecting performance determining device |
|---|---|
| 2 | internal combustion engine, |
| 3 | filter unit |
| 17 | pressure difference detecting unit |
| 21 | memory unit |
| 22 | determining unit |
| 32 | accumulation amount estimating unit |
| 33 | reset unit |
| dvol | operating condition of internal combustion engine |
| ΔPdpf | before-after pressure difference of filter unit. |

DETAILED DESCRIPTION OF THE PREFERRED EMBODIMENTS

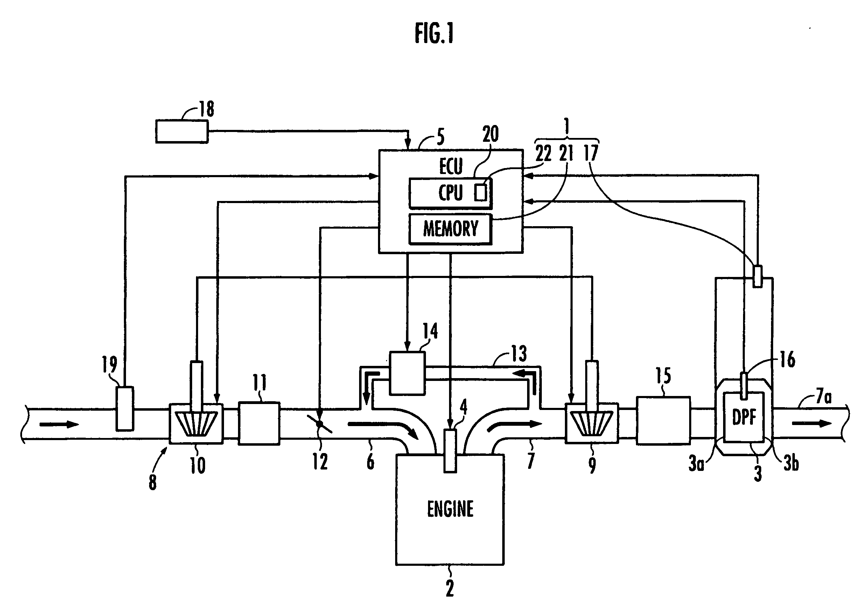

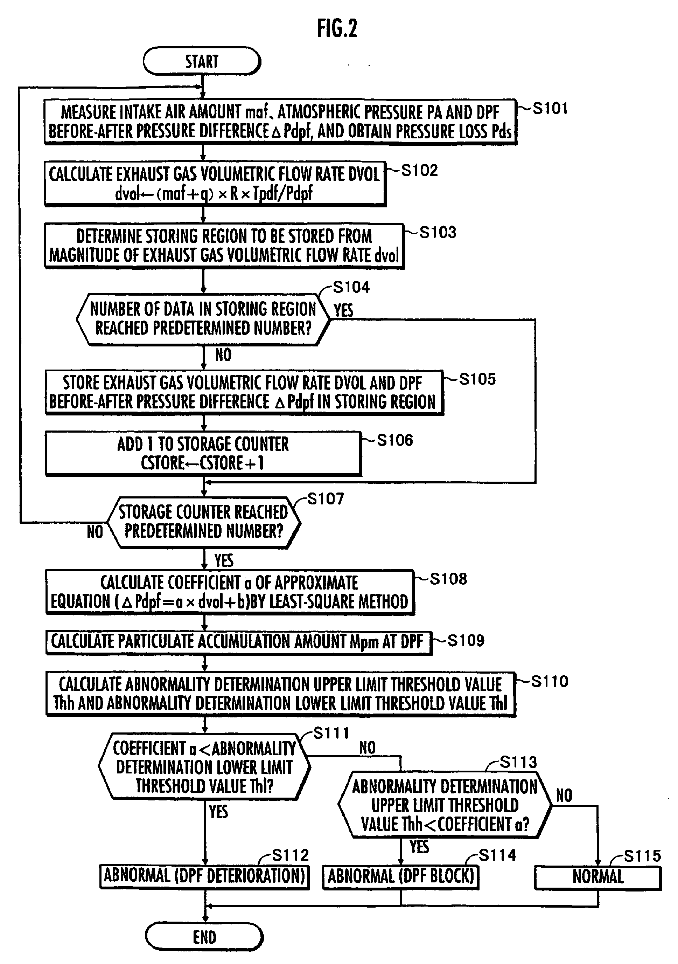

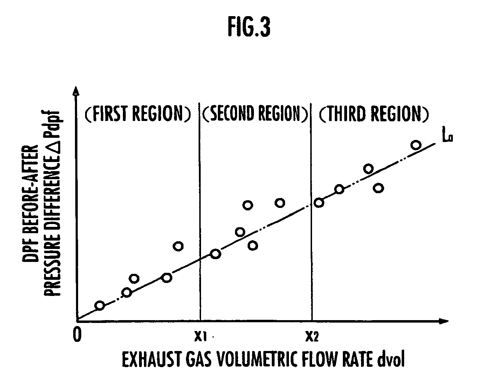

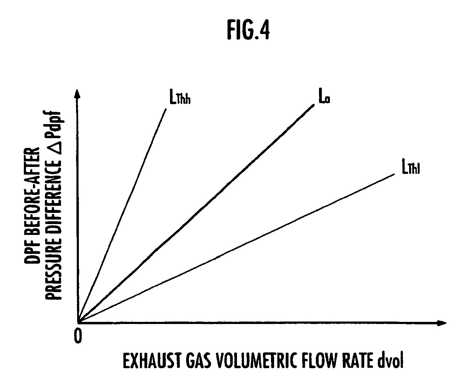

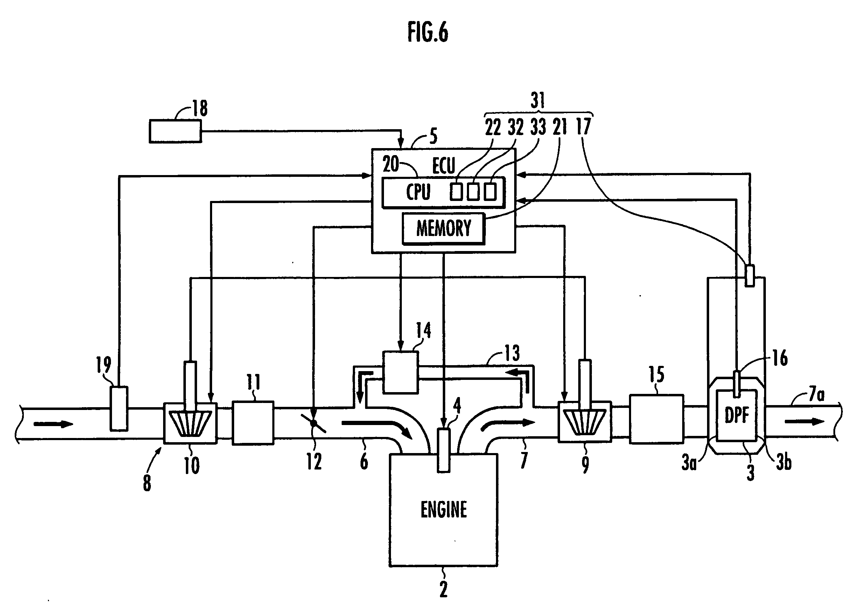

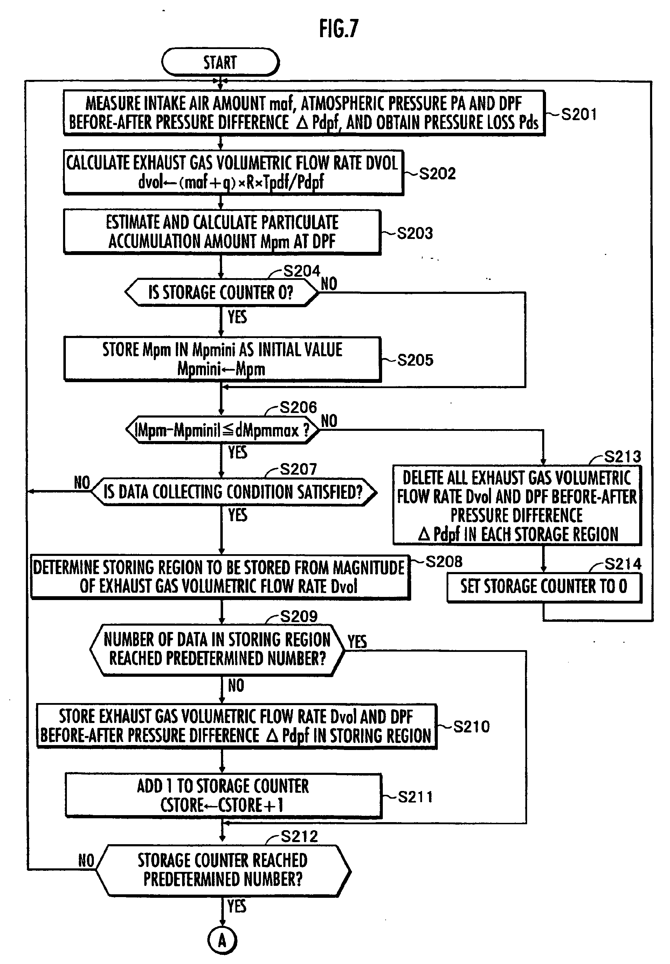

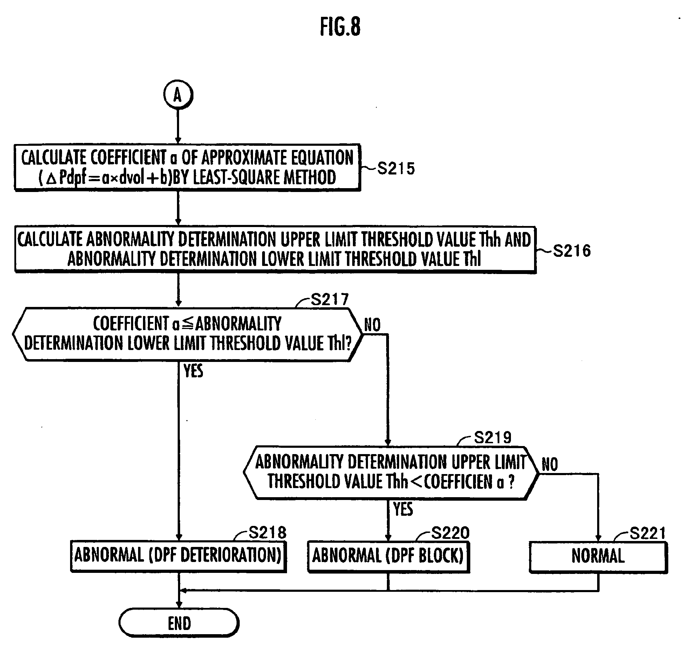

An embodiment of the present invention will now be explained below with reference to the accompanying drawings. FIG 1 is a view showing the configuration of an internal combustion engine equipped with a filter according to a first embodiment of a DPF exhaust gas collecting performance determining device and a control device therefor. FIG 2 is a flowchart indicating the operation of the exhaust gas collecting performance determining device shown in FIG 1. FIGS. 3, 5 and 9 are graphs indicating the relationship between an exhaust gas volumetric flow rate of an engine and a DPF before-after pressure difference. FIG 4 is a graph showing a determining method of the exhaust gas collecting performance determining device shown in FIG 1. FIG 6 is a view showing a configuration of the internal combustion engine provided with a filter related to a DPF exhaust gas collecting performance determining device according to a second embodiment of the present invention and a control device therefor. FIGS. 7 and 8 are flowcharts showing an operation of the exhaust gas collecting performance determining device shown in FIG 6

The DPF exhaust gas collecting performance determining device 1 of the first embodiment shown in FIG 1 relates to determining existence or nonexistence of an abnormality of a filter(hereinafter referred to as "DPF") which collects particulates in an exhaust gas of an internal combustion engine (hereinafter referred to as "engine") 2.

With reference to FIG 1, explanation will first be given on the engine 2. The engine 2 is a diesel engine injecting fuel directly into the cylinders, and a fuel injection valve 4 is provided to each cylinder. The fuel injection valve 4 is electrically connected to an electronic control unit (hereinafter referred to as "ECU") 5, and the valve opening time and valve opening period of the fuel injection valve 4 are controlled by the ECU 5.

The engine 2 is equipped with an intake air tube 6, an exhaust tube 7, and a supercharger 8. The supercharger 8 is equipped with a turbine 9 which is driven by the kinetic energy of the exhaust of the engine 2, and a compressor 10 which is rotary driven by the turbine 9 and which performs compression of the intake air.

In the air intake tube 6 downstream from the compressor 10, there are provide an intercooler 11 for cooling compressed air, and an intake shutter (throttle valve) 12 which controls intake air amount.

In between the exhaust tube 7 at the upstream side of the turbine 9 and the air intake tube 6 at the downstream side of the intake shutter 12, there is provided an exhaust reflux path 13 for refluxing the exhaust to the air intake tube 6. The exhaust reflux path 13 is provided with an exhaust reflux control valve ((hereinafter referred to as "EGR valve") 14 for controlling the exhaust reflux flow amount.

In the exhaust tube 7 at the downstream side of the turbine 9, there are provided a catalyst converter 15 for purifying the exhaust gas, and the DPF 3 for collecting particulates in the exhaust gas of the engine 2, in this order from the upstream side.

The catalyst converter 15 houses therein an NOx absorbent for absorbing NOx, and a catalyst for promoting oxidation and reduction. The catalyst converter 15 is configured so that, in an exhaust gas rich state, NOx emitted from the NOx absorbent is reduced by HC and CO, and is discharged as a nitrogen gas, and HC and CO are oxidized and are discharged as a water vapor and carbon dioxide.

The DPF 3 collects soot, which is a particulate consisting primarily of carbon (C) in the exhaust gas, when the exhaust gas passes through minute pores in a filter wall, by accumulating the same to the surface of the filter wall and to the pores inside the filter wall. As the constituent material of the filter wall, porous body of a ceramic made of silicon carbide (SiC) and the like or a metal may be used.

The DPF 3 is provided with a DPF temperature sensor 16 which detects the surface temperature (hereinafter referred to as "DPF surface temperature") Tdpf, a DPF before-after pressure difference sensor 17 which detects the pressure difference (hereinafter referred to as DPF before-after pressure difference) ∆Pdpf between an exhaust gas inflow side 3a and an exhaust gas outflow side 3b of the DPF 3, and an atmospheric pressure sensor (not shown) which detects an atmospheric pressure PA. Detected signals from the DPF temperature sensor 16 and the DPF before-after pressure difference sensor 17 are transmitted to the ECU 5.

Further, the engine 2 is provided with a crank angle position sensor 18 which detects an angle of rotation of a crank shaft of the engine 2, an intake air flow rate sensor 19 which detects an intake air flow rate maf of the engine 2, and a cooling water temperature sensor (not shown) which detects a cooling water temperature of the engine 2, and the like. Detected signals from these sensors are transmitted to the ECU 5. The number of revolutions NE of the engine 2 is calculated from the output from the crank angle position sensor 18.

The ECU 5 is configured from an input circuit (not shown) which has functions such as shaping the waveform of the input signals from the various sensors 16 to 19, correcting the level of electric voltage to a predetermined level, converting analog signal values to digital signal values, or the like, a central processing unit (hereinafter referred to as "CPU") 20, a memory 21 which stores various arithmetic programs executed by the CPU 20 and the arithmetic result or the like, and an output circuit (not shown) which transmits control signals to the fuel injection valve 4, the turbine 9, the compressor 10, the intake shutter 12, and the EGR valve 14.

The exhaust gas collecting performance determining device 1 of the first embodiment is configured from the DPF before-after pressure difference sensor 17, the memory 21 which stores the DPF before-after pressure difference ∆Pdpf detected by the DPF before-after pressure difference sensor 17, and a determining unit 22 which is executed by the CPU 20 and which determines the existence or nonexistence of the abnormality of the DPF 3.

Next, in accordance with the flowchart shown in FIG 2, the operation of the DPF exhaust gas collecting performance determining device 1 of the first embodiment will be explained. First, the intake air flow rate sensor 19 measures the intake air flow rate maf of the engine 2, the DPF temperature sensor 16 measures the DPF surface temperature Tdpf, the atmospheric pressure sensor measures the atmospheric pressure PA, the DPF before-after pressure difference sensor 17 measures the DPF before-after pressure difference ∆Pdpf between the exhaust gas inflow side 3a and the exhaust gas outflow side 3b of the DPF 3, and the CPU 20 calculates a pressure loss Pds between a rear end portion of the exhaust gas outflow side 3b of the DPF 3 and a leading end portion of a tail pipe 7a (step (hereinafter referred to S) 101). The pressure loss Pds is calculated on the basis of a map (not shown) indicating the relationship between the number of revolutions NE of the engine 2 and a request torque of the engine 2 preliminarily stored in the memory 21.

Next, the CPU 20 calculates an average pressure Pdpf at the DPF 3 according to an equation (1) below, and thereafter calculates an exhaust gas volumetric flow rate dvol of the DPF 3 according to an equation (2) below (S102). In the equation, R is a gas constant.

$$Pdpf = PA + Pds + (\Delta Pdpf/2) \ldots (1)$$

$$dvol = (maf + q) * R * Tdpf/Pdpf \ldots (2)$$

Next, upon storing the obtained exhaust gas volumetric flow rate dvol and the DPF before-after pressure difference ∆Pdpf to the memory 21, the CPU 20 first determines whether a value of the exhaust gas volumetric flow rate dvol corresponds to a range of 0 or more and less than $x_1$, a range of $x_1$ or more and less than $x_2$, or $x_2$ or more, and thereafter determines a storing region to be stored (S103). As is shown in FIG 3, $x_1$ and $x_2$ are given values which divides a whole region of the exhaust gas volumetric flow rate dvol of the DPF 3 as an operating condition of the engine 2 into three, i.e., a first region being a low load region, a second region being a medium load region, and a third region being a high load region. In the case where the value of the exhaust gas volumetric flow rate dvol is in the range of 0 or more and less than $x_1$, the exhaust gas volumetric flow rate dvol and the DPF before-after pressure difference ∆Pdpf are stored in the first region of the memory 21, in the case where the value of the exhaust gas volumetric flow rate dvol is in the range of $x_1$ or more and less than $x_2$, the exhaust gas volumetric flow rate dvol and the DPF before-after pressure difference ∆Pdpf are stored in the second region of the memory 21, and in the case where the value of the exhaust gas volumetric flow rate dvol is $x_2$ or more, the exhaust gas volumetric flow rate dvol and the DPF before-after pressure difference ΔPdpf are stored in the third region of the memory 21.

Subsequently, the CPU 20 determines whether or not a number of data already stored in any storage region of the first through third regions judged by the determination in S103 reached a predetermined number (for example, five) (S104), and proceeds to S107 in the case where the number reached the predetermined number, and proceeds to S105 in the case where the number did not reach the predetermined number.

In S105, the CPU 20 stores the exhaust gas volumetric flow rate dvol. and the DPF before-after pressure difference ΔPdpf to the relevant storage region of the first through third regions judged by the determination in S103. Subsequently, the CPU 20 adds one to a storage counter CSTORE (0 at the starting time) (S106). Subsequently, the CPU 20 determines whether or not the storage counter CSTORE reached a predetermined number CComp (for example, (five per region) * three regions = fifteen) (S107). In the case where the predetermined number is reached, the CPU 20 proceeds to S108, and in the case where the predetermined number is not reached, the CPU 20 returns to S101 and repeatedly executes the process in S101 through S106. FIG. 3 is a graph in which fifteen data (the exhaust gas volumetric flow rate dvol and the DPF before-after pressure difference ΔPdpt) are plotted.

The DPF before-after pressure difference ΔPdpf may be regarded as being proportional to the exhaust gas volumetric flow rate dvol of the engine 2, so that the relationship between the exhaust gas volumetric flow rate dvol and the DPF before-after pressure difference ΔPdpf may be approximate by an equation (3) below. In the equation, a and b are constants.

$$\Delta Pdpf = a * dvol + b \ldots (3)$$

In S108, the CPU 20 obtains a coefficient a of a first term of the equation (3), from all (fifteen) of the exhaust gas volumetric flow rate dvol and the DPF before-after pressure difference ΔPdpf stored in each of the first through third regions of the memory 21 by a least-square method. The coefficient a means a gradient of a straight line $L_a$, which indicates an approximate equation shown by the double dot-and-dash line in FIG. 3.

Subsequently, the CPU 20 calculates a particulate accumulation amount Mpm accumulated at the DPF 3, on the basis of the operating state of the engine 2 (S109).

Subsequently, the CPU 20 calculates an abnormality determination lower limit threshold value Th1 and an abnormality determination upper limit threshold value Thh, from a table between the particulate accumulation amount Mpm and the abnormality determination upper limit threshold value Thh and the abnormality determination lower limit threshold value Th1 previously stored in a memory 21 (S110).

Subsequently, the determining unit 22 determines whether or not the coefficient a is smaller than the abnormality determination lower limit threshold value Thl (S111). In the case where the coefficient a is smaller, then the determining unit 22 determines that "the DPF 3 is deteriorated, and is abnormal" (S122), and terminates the process. This corresponds to the case in FIG 4 that the gradient a of the straight line $L_a$ is smaller than a gradient Thl of a straight line $L_{Thl}$. Further, in S111, in the case where the coefficient a is not smaller than the abnormality determination lower limit threshold value Thl, then the determining unit 22 further determines whether or not the coefficient a is larger than the abnormality determination upper limit threshold value Thh (S113). In the case where the coefficient a is larger, then the determining unit 22 determines that "the DPF 3 is blocked, and is abnormal" (S114), and terminates the process. This corresponds to the case in FIG 4 that the gradient a of the straight line $L_a$ is larger than a gradient Thh of a straight line $L_{Thh}$. Further, in S113, in the case where the coefficient a is not larger than the abnormality determination upper limit threshold value Thh, then the determining unit 22 determines that "the DPF 3 is normal" (S115), and terminates the process. This corresponds to the case in FIG 4 that the gradient a of the straight line $L_a$ is in the range of from the gradient Thl of the straight line $L_{Thl}$ to the gradient Thh of the straight line $1_{Thh}$.

According to the DPF exhaust gas collecting performance determining device 1 of the first embodiment, a predetermined number of the exhaust gas volumetric flow rate dvol and the DPF before-after pressure difference ΔPdpf are stored in each of the first through third regions in the memory 21 sectionalized by the operating condition of the engine 2, so that the DPF before-after pressure difference ΔPdpf may be sampled without bias for the whole region of the operating condition of the engine 2. Therefore, according to the DPF exhaust gas collecting performance determining device 1 of the first embodiment, it becomes possible to determine the particulate collecting ability in the exhaust gas by the DPF 3 with good accuracy.

Further, in the DPF exhaust gas collecting performance determining device 1 of the first embodiment, the number of the exhaust gas volumetric flow rate dvol and the DPF before-after pressure difference ΔPdpf to be stored in the first through third regions of the memory 21 are set to be equally five in each region. However, the number to be stored may be different in each of the region, for example, it may be three in the first region, seven in the second region, and five in the third region.

Further, in the DPF exhaust gas collecting performance determining device 1 of the first embodiment, the CPU 20 obtains the coefficient a of the first term of the equation (3) by a least-square method from all (fifteen) of the exhaust gas volumetric flow rate dvol and the DPF before-after pressure difference ΔPdpf stored in each of the first through third regions in the memory 2.1. However, not all of the fifteen data must be used, and for example it may be obtained from thirteen data excluding the minimum value and the maximum value therefrom.

In the DPF exhaust gas collecting performance determining device 1 of the first embodiment, it is determined that the DPF 3 is deteriorated, and is abnormal" in the case where the coefficient a is smaller than the abnormality determination lower limit threshold value Thl, and is determined that "the DPF 3 is locked, and is abnormal" in the case where the coefficient a is larger than the abnormality determination upper limit threshold value Thh. However, these two cases may collectively be determined that "the DPF 3 is abnormal".

Further, in the DPF exhaust gas collecting performance determining device 1 of the first embodiment, the exhaust gas volumetric flow rate dvol, of the DPF 3 is used as the operating condition of the engine 2. However, any amount may be used, as long as such amount is related to the DPF before-after pressure difference $\Delta P$dpf.

Still further, in the DPF exhaust gas collecting performance determining device 1 of the first embodiment, the determining unit 22 may calculate the accumulation amount Mpm of the particulates accumulated at the DPF 3 on the basis of the operating condition of the engine 2, and may correct the range between the abnormality determination lower limit threshold value Thl to the abnormaling determination upper limit threshold value Thh to a value on a larger side in the case where the calculated accumulation amount Mpm is large. The intake air flow rate maf of the engine 2, the number of revolutions NE of the engine 2 and the like may be listed as the operating condition of the engine 2. By correcting the range as is explained above, it becomes possible to determine the existence or nonexistence of the abnormality of the DPF 3 with good accuracy, even in the case where the accumulation amount Mpm of the particulates accumulated at the DPF3 increases.

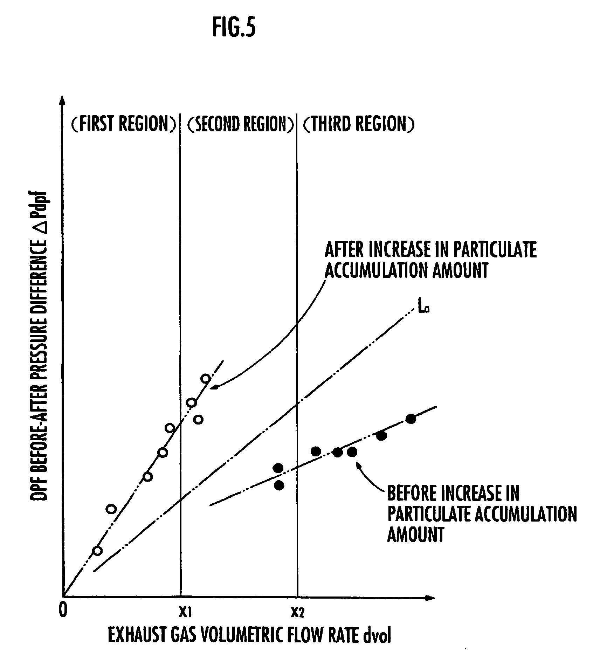

In the DPF exhaust gas collecting performance determining device 1 of the first embodiment, it is conceivable that it may not be possible to determine the particulate collecting performance with good accuracy, in the case where the particulate accumulation amount greatly deviates during determination of the particulate collecting performance of the DPF 3. For example, as is shown in FIG. 5, in the DPF exhaust gas collecting performance determining device 1 of the first embodiment, even in the case where seven data indicated by black circles in the figure (the exhaust gas volumetric flow rate dvol and the DPF before-after pressure difference $\Delta$Adpf) are stored in the memory 21, and thereafter the particulate accumulation amount in the DPF 3 increased abruptly and eight data shown by white circles in the figure are stored in the memory 21, the coefficient a of the first term in the equation (3) (corresponds to the gradient of the straight line $L_a$ in the figure) is calculated from a total of fifteen data comprising the seven data indicated by black circles and eight data indicated by white circles. However, because the particulate accumulation amount of the DPF 3 actually increased abruptly, the current gradient of the straight line $L_a$ should be larger than the gradient of the straight line $L_a$ in the figure. Therefore, it is desired to delete inadequate data and determine the particulate collecting performance of the DPF 3 from newly obtained fifteen data.

As such, with reference to FIG. 6, explanation will be given on a second embodiment of the DPF exhaust gas collecting performance determining device 31. The DPF exhaust gas collecting performance determining device 31 of the second embodiment is the exhaust gas collecting performance determining device 1 of the first embodiment shown in FIG. 1 configured from the DPF before-after pressure difference sensor 17, the memory 21 which stores the DPF before-after pressure difference $\Delta$Pdpf detected by the DPF before-after pressure difference sensor 17, and the determining unit 22 which is executed by the CPU 20 and which determines the existence or nonexistence of the abnormality of the DPF 3, further comprising an accumulation amount estimating unit 32 and a reset unit 33.

The accumulation amount estimating unit 32 is executed by the CPU 20, which estimates the particulate accumulation amount Mpm accumulated at the DPF 3 on the basis of the operating state of the engine 2.

The reset unit 33 deletes all of the DPF before-after pressure difference $\Delta$Pdpf stored in all regions of a memory 21, when the DPF before-after pressure difference $\Delta$Pdpf is being stored in each region of the memory 21, in the case where the particulate accumulation amount Mpm estimated by the accumulation amount estimating unit 32 does not match a predetermined condition.

Subsequently, according to the flowchart shown in FIG. 6 and FIG. 7, explanation will be given on the operation of the DPF exhaust gas collecting performance determining device 31 of the second embodiment. First, similar to S101 shown in FIG. 2, the intake air flow rate maf, the DPF surface temperature Tdpf, the atmospheric pressure PA, and the DPF before-after pressure difference $\Delta$Pdpf of the engine 2 are measured by each of the sensors 19,16,17 and the atmospheric pressure sensor, and the CPU 20 calculates the pressure loss Pds on the basis of the map indicating the relationship between the number of revolutions NE of the engine 2 and the request torque of the engine 2 (S201).

Next, similar to S102 shown in FIG. 2, the CPU 20 calculates the average pressure Pdpf of the DPF 3 according to the equation (1), and subsequently calculates the exhaust gas volumetric flow rate dvol of the DPF 3 according to the equation (2) (S202).

Next, the accumulation amount estimating unit 32 estimates the particulate accumulation amount Mpm accumulated at the DPF 3 on the basis of the operating state of the engine 2 (S203). For example, the number of revolutions NE of the engine 2, a fuel injection amount by the fuel injection valve 4 to the engine 2, which is measured by a fuel injection amount sensor (not shown), or the like may be listed as the operating state of the engine 2. The particulate accumulation amount Mpm is estimated, for example by estimating the accumulation amount per unit time on the basis of the number of revolutions NE of the engine 2 and the fuel injection amount, and by integrating the estimation amount.

Next, the CPU 20 determines whether or not the storage counter CSTORE (0 at the starting time) is 0 (S204), and proceeds to S205 in the case where it is 0, or proceeds to S206 if it is not 0.

In S205, the estimated particulate accumulation amount Mpm is stored as an initial value in a particulate initial accumulation amount Mpmini, and the process proceeds to S206.

In S206, a difference between tube estimated particulate accumulation amount Mpm and the particulate initial accumulation amount Mpmini is compared, and it is determined whether or not the absolute value of the difference is equal to or less than a predetermined value dMpmmax. In the case where the absolute value of the difference is equal to or less than the predetermined amount dMpmmax, the process proceeds to S207. In the case where the absolute value of the difference exceeds the predetermined amount dMpmmax, then the process proceeds to S213. The case where the absolute value exceeds the predetermined value dMpmmax corresponds to the case where the particulate accumulation amount at the DPF 3 varied greatly in mid-course.

In S207, it is determined whether or not a data collection condition of the exhaust gas volumetric flow rate dvol and the DPF before-after pressure difference ΔPdpf is satisfied. In the case where the data collection condition is satisfied in S207, the process proceeds to S208. In the case where the data collection condition is not satisfied, the process returns to S201.

In S208, similar to S103 shown in FIG. 2, the CPU 20 determines the storage region to be stored from the value of the exhaust gas volumetric flow rate dvol. Subsequently, similar to S104 shown in FIG. 2, the CPU 20 determines whether or not the data already stored in any one of the first through third regions of the storage region judged by the determination in S208 reached a predetermined number (for example, five) (S209). In the case where the data stored reached the predetermined number, the process proceeds to S212. In the case where the data stored had not reached the predetermined number, the process proceeds to S210.

In S210, similar to S105 shown in FIG 2, the CPU 20 stores the exhaust gas volumetric flow rate dvol and the DPF before-after pressure difference ΔPdpf to the relevant storage region of the first through third regions judged by the determination in S208. Subsequently, the CPU 20 adds one to the storage counter CSTORE (S211). Next, similar to S107 shown in FIG 2, the CPU 20 determines whether or not the storage counter CSTORE reached the predetermined number CComp (for example, (five per region) * three regions = fifteen) (S212). In the case where the predetermined number is reached, the CPU 20 proceeds to S215 in FIG 7, and in the case where the predetermined number is not reached, the CPU 20 returns to S201 and repeatedly executes the process in S201 through S212.

On the other hand, in the case where the absolute value of the difference between the particulate accumulation amount Mpm and the particulate initial accumulation amount Mpmini exceeds the predetermined value dMpmmax in S206, then the reset unit 33 deletes all of the exhaust gas volumetric flow rate dvol and the DPF before-after pressure difference APdpf stored in each of the first through third regions of the memory 21 in S213. Subsequently, the CPU 20 sets the storage counter CSTORE to 0, and returns to S201 (S214).

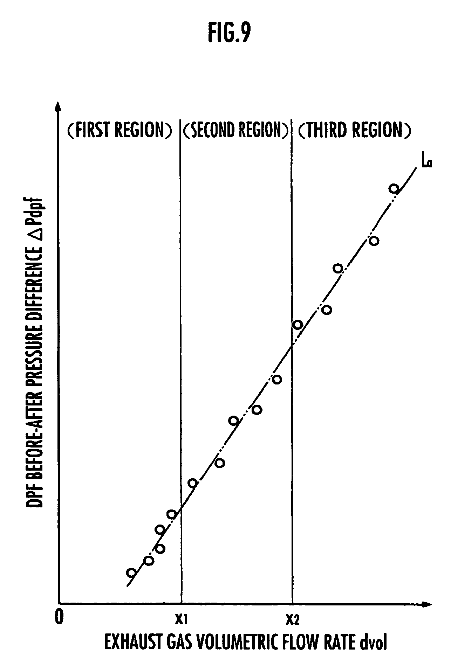

Subsequently, in S215 shown in FIG 8, similar to S108 shown in FIG .2, the CPU 20 obtains the coefficient a of the first term of the equation (3) by the least-square method, from all (fifteen) of the exhaust gas volumetric flow rate dvol and the DPF before-after pressure difference ΔPdpf stored in each of the first through third regions of the memory 21. The coefficient a means a gradient of the straight line $L_a$ indicating the approximate equation indicated by double dot-and-dash line in FIG. 9.

At this time, as a result of the reset unit 33 deleting all of the data (the exhaust gas volumetric flow rate dvol and the DPF before-after pressure difference ΔPdpf) stored in the memory 21 in S213 in the case where the absolute value of the difference between the particulate accumulation amount Mpm and the particulate initial accumulation amount Mpmini exceeds the predetermined value dMpmmax, the data stored in the first through third regions of the memory is limited to those stored in the case where the absolute value of the difference is equal to or smaller than the predetermined value.

Subsequently, similar to S110 shown in FIG 2, the CPU 20 calculates an abnormality determination lower limit threshold value Th1 and an abnormality determination upper limit threshold value Thh, from a table between the particulate accumulation amount Mpm and the abnormality determination upper limit threshold value Thh and the abnormality determination lower limit threshold value Th1 previously stored in a memory 2 (S216).

Subsequently, similar to S111 shown in FIG 2, the determining unit 22 determines whether or not the coefficient a is smaller than the abnormality determination lower limit threshold value Thl (S217). In the case where the coefficient a is smaller, then the determining unit 22 determines that "the DPF 3 is deteriorated, and is abnormal" (S218), and terminates the process. Further, in S217, in the case where the coefficient a is not smaller than the abnormality determination lower limit threshold value Thl, the determining unit 22 further determines whether or not the coefficient a is larger than the abnormality determination upper limit threshold value Thh (S219). In the case where the coefficient a is larger, then the determining unit 22 determines that "the DPF 3 is blocked, and is abnormal" (S220), and terminates the process. Further, in S219, in the case where the coefficient a is not larger than the abnormality determination upper limit threshold value Thh, then the determining unit 22 determines that "the DPF 3 is normal" (S221), and terminates the process.

As is explained above, according to the DPF exhaust gas collecting performance determining device 31 of the second embodiment, even in the case where the particulate accumulation amount at the DPF 3 varies during when the CPU 20 is storing fifteen data of the exhaust gas volumetric flow rate dvol and the DPF before-after pressure difference $\Delta$Pdpf in the memory 21, all of the exhaust gas volumetric flow rate dvol and the DPF before-after pressure difference $\Delta$Pdpf stored in the memory 21 are deleted and the newly obtained exhaust gas volumetric flow rate dvol and the DPF before-after pressure difference $\Delta$Pdpf are stored in the memory 21. Therefore, according to the DPF exhaust gas collecting performance determining device 31 of the second embodiment, even in the case where the particulate accumulation amount varies greatly during determination of the particulate collecting performance of the DPF 3, it is possible to determine the particulate collecting performance with good accuracy.

In the DPF exhaust gas collecting performance determining device 31 of the second embodiment, in the case where the absolute value of the difference between the estimated particulate accumulation amount Mpm and the particulate initial accumulation amount Mpmini is equal to or less than the predetermined value dMpmmax, all of the data (the exhaust gas volumetric flow rate dvol and the DPF before-after pressure difference $\Delta$Pdpf) stored in each of the first through third regions of the memory 21 are deleted by the reset unit 33 in S213. However, only a part of the data stored may be deleted. According to the DPF exhaust gas collecting performance determining device in which a part of the data stored in the memory 21 is deleted by the reset unit 33, the other part of data is not deleted and are kept stored in the memory 21. Therefore, by using the remaining data, the particulate collecting performance of the DPF 3 may be determined promptly compared to the DPF exhaust gas collecting performance determining device 31 of the second embodiment in which all of the stored data are deleted.

## Claims

1. An exhaust gas collecting performance determining method for determining a particulate collecting performance in an exhaust gas by a filter unit provided in an exhaust system of an internal combustion engine, comprising:

   detecting a before-after pressure difference of the filter unit;

   **characterised by** memorizing a predetermined number of the detected before-after pressure difference in each region of an operating region sectionalized into a plurality of regions by an exhaust gas flow rate of the internal combustion engine;
   calculating a gradient of an approximate equation indicating a pressure difference characteristics of the filter unit with respect to the exhaust gas flow rate, when the predetermined number of the before-after pressure difference is memorized in all of the regions, on the basis of the relationship between the memorized before-after pressure difference and the exhaust gas flow rate at the time when each of the before-after pressure difference is detected, and determining that the filter unit is abnormal in the case where the gradient of the calculated approximate equation is out of a predetermined range; and
   calculating an accumulation amount of the particulates accumulated at the filter unit on the basis of the operating state of the internal combustion engine, and correcting the predetermined range to a side in which the gradient of the approximate equation is larger when the calculated accumulation amount is large.

2. The exhaust gas collecting performance determining method according to Claim 1, wherein it is determined that the filter unit is deteriorated, in the case where the calculated gradient of the approximate equation is smaller than a lower limit value of the predetermined range.

3. The exhaust gas collecting performance determining method according to Claim 1, wherein it is determined that the filter unit is blocked, in the case where the calculated gradient of the approximate equation is larger than an upper limit value of the predetermined range.

4. The exhaust gas collecting performance determining method according to Claim 1, wherein the particulate accumulation amount accumulated at the filter unit is estimated on the basis of the operating state of the internal combustion engine, and deleting at least a part of the memorized before-after pressure difference, during when the before-after pressure difference is memorized in each of the regions, in the case where an amount of change of the estimated particulate accumulation amount exceeds a predetermined value.

5. The exhaust gas collecting performance determining method according to Claim 4, wherein the amount of change of the particulate accumulation amount is, taking the particulate accumulation amount estimated at the time when the before-after pressure difference is first memorized in any one of the regions as a particulate initial accumulation amount, a difference from the particulate initial accumulation amount.

**6.** An exhaust gas collecting performance determining device for determining a particulate collecting performance in an exhaust gas by a filter unit provided in an exhaust system of an internal combustion engine, comprising:

a pressure difference detecting unit which detects a before-after pressure difference of the filter unit;
**characterized by** a memory unit which memorizes a predetermined number of the detected before-after pressure difference by the pressure difference detecting unit in each region of an operating region sectionalized into a plurality of regions by an exhaust gas flow rate of the internal combustion engine;
a determining unit which calculates a gradient of an approximate equation indicating a pressure difference characteristics of the filter unit with respect to the exhaust gas flow rate, when the predetermined number of the before-after pressure difference is memorized in all of the regions by the memory unit, on the basis of the relationship between the memorized before-after pressure difference and the exhaust gas flow rate at the time when each of the before-after pressure difference is detected, and determines that the filter unit is abnormal in the case where the gradient of the calculated approximate equation is out of a predetermined range, and which also calculates an accumulation amount of the particulates accumulated at the filter unit on the basis of the operating state of the internal combustion engine, and corrects the predetermined range to a side in which the gradient of the approximate equation is larger when the calculated accumulation amount is large.

**7.** The exhaust gas collecting performance determining device according to Claim 6, wherein the determining unit determines that the filter unit is deteriorated, in the case where the calculated gradient of the approximate equation is smaller than a lower limit value of the predetermined range.

**8.** The exhaust gas collecting performance determining device according to Claim 6, wherein the determining unit determines that the filter unit is blocked, in the case where the calculated gradient of the approximate equation is larger than an upper limit value of the predetermined range.

**9.** The exhaust gas collecting performance determining device according to Claim 6, comprising an accumulation amount estimating unit which estimates the particulate accumulation amount accumulated at the filter unit on the basis of the operating state of the internal combustion engine, and
a reset unit which deletes at least a part of the memorized before-after pressure difference, during when the before-after pressure difference is memorized in each of the regions by the memory unit, in the case where an amount of change of the particulate accumulation amount estimated by the accumulation amount estimating unit exceeds a predetermined value.

**10.** The exhaust gas collecting performance determining device according to Claim 9, wherein the amount of change of the particulate accumulation amount is, taking the particulate accumulation amount estimated by the accumulation amount estimating unit at the time when the before-after pressure difference is first memorized in any one of the regions by the memory unit as a particulate initial accumulation amount, a difference from the particulate initial accumulation amount.

### Patentansprüche

**1.** Abgas- Sammel- Leistung- Bestimmungsverfahren, zum Bestimmen einer Partikel-Sammel-Leistung in einem Abgas durch eine Filtereinheit, die in einem Abgassystem von einem Verbrennungsmotor vorgesehen ist, umfassend:

Erfassen einer vorher-nachher Druckdifferenz der Filtereinheit, **gekennzeichnet durch**
Speichern einer vorbestimmten Anzahl von der erfassten vorher-nachher Druckdifferenz in jedem Bereich von einem Betriebsbereich, der gemäß einer Abgas-Strömungsrate des Verbrennungsmotors in eine Mehrzahl von Bereiche unterteilt ist,
Berechnen eines Gradienten einer Näherungsgleichung, die eine Druckdifferenz-Charakteristik der Filtereinheit in Bezug auf die Abgas-Strömungsrate angibt, wenn die vorbestimmte Anzahl von der vorher-nachher Druckdifferenz in allen den Bereichen gespeichert ist, auf der Grundlage der Beziehung zwischen der gespeicherten vorher-nachher Druckdifferenz und der Abgas-Strömungsrate zu der Zeit, wenn jede vorher-nachher Druckdifferenz erfasst ist, und
Bestimmen, dass die. Filtereinheit abnormal ist, falls der Gradient der berechneten Näherungsgleichung außerhalb eines vorbestimmten Bereichs liegt, und
Berechnen eines Akkumulationsbetrages der an der Filtereinheit akkumulierten Partikel auf der Grundlage des Betriebszustands des Verbrennungsmotors; und

Korrigieren des vorbestimmten Bereichs zu einer Seite hin, auf welcher der Gradient der Näherungsgleichung größer ist, wenn der berechnete Akkumulationsbetrag groß ist.

2. Abgas- Sammel- Leistung- Bestimmungsverfahren nach Anspruch 1, wobei bestimmt wird, dass die Filtereinheit sich verschlechtert hat, falls der berechnete Gradient der Näherungsgleichung kleiner ist als ein unterer Grenzwert des vorbestimmten Bereichs.

3. Abgas- Sammel- Leistung- Bestimmungsverfahren nach Anspruch 1, wobei bestimmt wird, dass die Filtereinheit blockiert ist, falls der berechnete Gradient der Näherungsgleichung größer ist als ein oberer Grenzwert des vorbestimmten Bereichs.

4. Abgas- Sammel- Leistung- Bestimmungsverfahren nach Anspruch 1, wobei der an der Filtereinheit akkumulierte Partikel-Akkumulationsbetrag auf der Grundlage des Betriebszustands des Verbrennungsmotors abgeschätzt wird, und

Löschen von wenigstens einem Teil der gespeicherten vorher-nachher Druckdifferenz, während die vorher-nachher Druckdifferenz in jedem der Bereiche gespeichert wird, falls ein Änderungsbetrag von dem abgeschätzten Partikel-Akkumulationsbetrag einen vorbestimmten Wert übersteigt.

5. Abgas- Sammel- Leistung- Bestimmungsverfahren nach Anspruch 4, wobei der Änderungsbetrag des Partikel-Akkumulationsbetrages eine Differenz von einem anfänglichen Partikel-Akkumulationsbetrag ist, wobei der Partikel-Akkumulationsbetrag, der zu der Zeit abgeschätzt wird, wenn die vorher-nachher Druckdifferenz zuerst in einem der Bereiche gespeichert wird, als der anfängliche Partikel-Akkumulationsbetrag genommen wird.

6. Abgas- Sammel- Leistung- Bestimmungsvorrichtung zum Bestimmen einer Partikel-Sammel-Leistung in einem Abgas durch eine Filtereinheit, die in einem Abgassystem von einem Verbrennungsmotor vorgesehen ist, umfassend:

eine Druckdifferenz-Erfassungseinheit, welche eine vorher-nachher Druckdifferenz der Filtereinheit erfasst, **gekennzeichnet durch**:

eine Speichereinheit, die eine vorbestimmte Anzahl der vorher-nachher Druckdifferenz speichert, die **durch** die Druckdifferenz-Erfassungseinheit in jedem Bereich eines Betriebsbereichs erfasst wird, der gemäß einer Abgas-Strömungsrate des Verbrennungsmotors in eine Mehrzahl von Bereiche unterteilt ist,

eine Bestimmungseinheit, die einen Gradienten einer Näherungsgleichung berechnet, die eine Druckdifferenz-Charakteristik der Filtereinheit in Bezug auf die Abgas-Strömungsrate angibt, wenn die vorbestimmte Anzahl von der vorher-nachher Druckdifferenz in allen den Bereichen **durch** die Speichereinheit gespeichert ist, auf der Grundlage der Beziehung zwischen der gespeicherten vorher-nachher Druckdifferenz und der Abgas-Strömungsrate zu der Zeit, wenn jede vorher-nachher Druckdifferenz erfasst ist, und die bestimmt, dass die Filtereinheit abnormal ist, falls der Gradient der berechneten Näherungsgleichung außerhalb von einem vorbestimmten Bereich liegt, und die ebenso einen Akkumulationsbetrag der an der Filtereinheit akkumulierten Partikel berechnet, auf der Grundlage des Betriebszustands des Verbrennungsmotors, und den vorbestimmten Bereich zu einer Seite hin korrigiert, auf welcher der Gradient der Näherungsgleichung größer ist, wenn der berechnete Akkumulationsbetrag groß ist.

7. Abgas- Sammel- Leistung- Bestimmungsvorrichtung nach Anspruch 6, wobei die Bestimmungseinheit bestimmt, dass die Filtereinheit sich verschlechtert hat, falls der berechnete Gradient der Näherungsgleichung kleiner ist, als ein unterer Grenzwert des vorbestimmten Bereichs.

8. Abgas- Sammel- Leistung- Bestimmungsvorrichtung nach Anspruch 6, wobei die Bestimmungseinheit bestimmt, dass die Filtereinheit blockiert ist, falls der berechnete Gradient der Näherungsgleichung größer ist als ein oberer Grenzwert des vorbestimmten Bereichs.

9. Abgas- Sammel- Leistung- Bestimmungsvorrichtung nach Anspruch 6, umfassend eine Akkumulationsbetrag-Abschätzeinheit, welche auf der Grundlage des Betriebszustandes des Verbrennungsmotors den Partikel-Akkumulationsbetrag abschätzt, der an der Filtereinheit akkumuliert ist, und

eine Reset-Einheit, welche wenigstens einen Teil der gespeicherten vorher-nachher Druckdifferenz löscht, während die vorher-nachher Druckdifferenz in jedem der Bereiche durch die Speichereinheit gespeichert wird, falls ein Änderungsbetrag des Partikel-Akkumulationsbetrages, der durch die Akkumulationsbetrag-Abschätzeinheit abgeschätzt wird, einen vorbestimmten Wert übersteigt.

**10.** Abgas-Sammel-Leistung-Bestimmungsvorrichtung nach Anspruch 9, wobei der Änderungsbetrag des Partikel-Akkumulationsbetrages eine Differenz von einem anfänglichen Partikel-Akkumulationsbetrag ist, wobei der Partikel-Akkumulationsbetrag, welcher von der Akkumulationsbetrag-Abschätzeinheit zu der Zeit abgeschätzt wird, wenn die vorher-nachher Druckdifferenz zuerst in einem der Bereiche durch die Speichereinheit gespeichert wird, als der anfängliche Partikel-Akkumulationsbetrag genommen wird.

**Revendications**

**1.** Procédé de détermination de performance de collecte de gaz d'échappement permettant de déterminer une performance de collecte de particules dans un gaz d'échappement par une unité de filtre prévue dans un système d'échappement d'un moteur à combustion interne, comprenant les étapes consistant à :

détecter une différence de pression avant/après de l'unité de filtre ;
**caractérisé par** :

mémoriser une quantité prédéterminée de la différence de pression avant/après détectée dans chaque région d'une région de fonctionnement subdivisée en une pluralité de régions par un débit de gaz d'échappement du moteur à combustion interne ;
calculer un gradient d'une équation d'approximation indiquant une caractéristique de différence de pression de l'unité de filtre par rapport au débit de gaz d'échappement, lorsque la quantité prédéterminée de la différence de pression avant/après est mémorisée dans toutes les régions, sur la base de la relation entre la différence de pression avant/après mémorisée et le débit de gaz d'échappement au moment où chacune des différences de pression avant/après est détectée, et déterminer que l'unité de filtre est anormale dans le cas où le gradient de l'équation d'approximation calculée se situe hors d'une plage prédéterminée, et calculer une quantité d'accumulation des particules accumulées au niveau de l'unité de filtre sur la base de l'état de fonctionnement du moteur à combustion interne, et corriger la plage prédéterminée vers un côté dans lequel le gradient de l'équation d'approximation est plus grand lorsque la quantité d'accumulation calculée est grande.

**2.** Procédé de détermination de performance de collecte de gaz d'échappement selon la revendication 1, dans lequel il est déterminé que l'unité de filtre est détériorée, dans le cas où le gradient calculé de l'équation d'approximation est plus petit qu'une valeur limite inférieure de la plage prédéterminée.

**3.** Procédé de détermination de performance de collecte de gaz d'échappement selon la revendication 1, dans lequel il est déterminé que l'unité de filtre est obstruée, dans le cas où le gradient calculé de l'équation d'approximation est plus grand que la valeur limite supérieure de la plage prédéterminée.

**4.** Procédé de détermination de performance de collecte de gaz d'échappement selon la revendication 1, dans lequel la quantité d'accumulation de particules accumulées au niveau de l'unité de filtre est estimée sur la base de l'état de fonctionnement du moteur à combustion interne, et
l'étape consistant à supprimer au moins une partie de la différence de pression avant/après mémorisée, pendant que la différence de pression avant/après est mémorisée dans chaque région, au cas où un changement de la quantité d'accumulation de particules estimée dépasse une valeur prédéterminée.

**5.** Procédé de détermination de performance de collecte de gaz d'échappement selon la revendication 4, dans lequel le changement de la quantité d'accumulation de particules est, en prenant en compte la quantité d'accumulation de particules estimée au moment où la différence de pression avant/après est pour la première fois mémorisée dans l'une quelconque des régions en tant que quantité d'accumulation initiale de particules, égal à une différence par rapport à la quantité d'accumulation initiale de particules.

**6.** Dispositif de détermination de performance de collecte de gaz d'échappement permettant de déterminer une performance de collecte de particules dans un gaz d'échappement par une unité de filtre prévue dans un système d'échappement d'un moteur à combustion interne, comprenant :

une unité de détection de différence de pression qui détecte une différence de pression avant/après de l'unité de filtre ;
**caractérisé par** ;

une unité de mémoire qui mémorise une quantité prédéterminée de la différence de pression avant/après détectée par l'unité de détection de différence de pression dans chaque région d'une région de fonctionnement subdivisée en une pluralité de régions par un débit de gaz d'échappement du moteur à combustion interne ;

une unité de détermination qui calcule un gradient d'une équation d'approximation indiquant une caractéristique de différence de pression de l'unité de filtre par rapport au débit de gaz d'échappement, lorsque la quantité prédéterminée de la différence de pression avant/après est mémorisée dans toutes les régions de l'unité de mémoire, sur la base de la relation entre la différence de pression avant/après mémorisée et le débit de gaz d'échappement au moment où chacune des différences de pression avant/après est détectée, et détermine que l'unité de filtre est anormale dans le cas où le gradient de l'équation d'approximation calculée se situe hors d'une plage prédéterminée, et qui calcule également une quantité d'accumulation des particules accumulées au niveau de l'unité de filtre sur la base de l'état de fonctionnement du moteur à combustion interne, et corrige la plage prédéterminée vers un côté dans lequel le gradient de l'équation d'approximation est plus grand lorsque la quantité d'accumulation calculée est grande.

7. Dispositif de détermination de performance de collecte de gaz d'échappement selon la revendication 6, dans lequel l'unité de détermination détermine que l'unité de filtre est détériorée, dans le cas où le gradient calculé de l'équation d'approximation est plus petit que la valeur limite inférieure de la plage prédéterminée.

8. Dispositif de détermination de performance de collecte de gaz d'échappement selon la revendication 6, dans lequel l'unité de détermination détermine que l'unité de filtre est obstruée, dans le cas où le gradient calculé de l'équation d'approximation est plus grand que la valeur limite supérieure de la plage prédéterminée.

9. Dispositif de détermination de performance de collecte de gaz d'échappement selon la revendication 6, comprenant une unité d'estimation de quantité d'accumulation qui estime la quantité d'accumulation de particules accumulées au niveau de l'unité de filtre sur la base d'un état de fonctionnement du moteur à combustion interne, et
une unité de réinitialisation qui supprime au moins une partie de la différence de pression avant/après mémorisée pendant que la différence de pression avant/après est mémorisée dans chaque région par l'unité de mémoire, dans le cas où un changement de la quantité d'accumulation de particules estimée par l'unité d'estimation de quantité d'accumulation dépasse une valeur prédéterminée.

10. Dispositif de détermination de performance de collecte de gaz d'échappement selon la revendication 9, dans lequel le changement de la quantité d'accumulation de particules est, en prenant en compte la quantité d'accumulation de particules estimée par l'unité d'estimation de quantité d'accumulation au moment où la différence de pression avant/après est pour la première fois mémorisée dans l'une quelconque des régions par l'unité de mémoire en tant que quantité d'accumulation initiale de particules, égal à une différence par rapport à la quantité d'accumulation initiale de particules.

FIG.1

## FIG.2

START

MEASURE INTAKE AIR AMOUNT maf, ATMOSPHERIC PRESSURE PA AND DPF BEFORE-AFTER PRESSURE DIFFERENCE △Pdpf, AND OBTAIN PRESSURE LOSS Pds — S101

CALCULATE EXHAUST GAS VOLUMETRIC FLOW RATE DVOL — S102
dvol←(maf+q)×R×Tpdf/Pdpf

DETERMINE STORING REGION TO BE STORED FROM MAGNITUDE OF EXHAUST GAS VOLUMETRIC FLOW RATE dvol — S103

NUMBER OF DATA IN STORING REGION REACHED PREDETERMINED NUMBER? — S104 — YES

NO

STORE EXHAUST GAS VOLUMETRIC FLOW RATE DVOL AND DPF BEFORE-AFTER PRESSURE DIFFERENCE △Pdpf IN STORING REGION — S105

ADD 1 TO STORAGE COUNTER CSTORE←CSTORE+1 — S106

STORAGE COUNTER REACHED PREDETERMINED NUMBER? — S107

NO

YES

CALCULATE COEFFICIENT a OF APPROXIMATE EQUATION (△Pdpf=a×dvol+b)BY LEAST-SQUARE METHOD — S108

CALCULATE PARTICULATE ACCUMULATION AMOUNT Mpm AT DPF — S109

CALCULATE ABNORMALITY DETERMINATION UPPER LIMIT THRESHOLD VALUE Thh AND ABNORMALITY DETERMINATION LOWER LIMIT THRESHOLD VALUE Thl — S110

COEFFICIENT a<ABNORMALITY DETERMINATION LOWER LIMIT THRESHOLD VALUE Thl? — S111 — NO

YES

ABNORMALITY DETERMINATION UPPER LIMIT THRESHOLD VALUE Thh<COEFFICIENT a? — S113 — NO

YES

ABNORMAL (DPF DETERIORATION) — S112

ABNORMAL (DPF BLOCK) — S114

NORMAL — S115

END

FIG.3

EXHAUST GAS VOLUMETRIC FLOW RATE dvol

# FIG.4

# FIG.5

FIG.6

## FIG.7

START

MEASURE INTAKE AIR AMOUNT maf, ATMOSPHERIC PRESSURE PA AND DPF BEFORE-AFTER PRESSURE DIFFERENCE △ Pdpf, AND OBTAIN PRESSURE LOSS Pds — S201

CALCULATE EXHAUST GAS VOLUMETRIC FLOW RATE DVOL
$dvol \leftarrow (maf+q) \times R \times Tpdf/Pdpf$ — S202

ESTIMATE AND CALCULATE PARTICULATE ACCUMULATION AMOUNT Mpm AT DPF — S203

S204
IS STORAGE COUNTER 0?  →NO

↓YES

STORE Mpm IN Mpmini AS INITIAL VALUE
$Mpmini \leftarrow Mpm$ — S205

S206
$|Mpm-Mpmini| \leqq dMpmmax$ ?  →NO

↓YES

S207
NO ← IS DATA COLLECTING CONDITION SATISFIED?

↓YES

S213
DELETE ALL EXHAUST GAS VOLUMETRIC FLOW RATE Dvol AND DPF BEFORE-AFTER PRESSURE DIFFERENCE △ Pdpf IN EACH STORAGE REGION

DETERMINE STORING REGION TO BE STORED FROM MAGNITUDE OF EXHAUST GAS VOLUMETRIC FLOW RATE Dvol — S208

S214
SET STORAGE COUNTER TO 0

S209
NUMBER OF DATA IN STORING REGION REACHED PREDETERMINED NUMBER?  →YES

↓NO

STORE EXHAUST GAS VOLUMETRIC FLOW RATE Dvol AND DPF BEFORE-AFTER PRESSURE DIFFERENCE △ Pdpf IN STORING REGION — S210

ADD 1 TO STORAGE COUNTER
$CSTORE \leftarrow CSTORE+1$ — S211

S212
NO ← STORAGE COUNTER REACHED PREDETERMINED NUMBER?

↓YES

A

FIG.8

A

CALCULATE COEFFICIENT a OF APPROXIMATE EQUATION ( $\triangle$ Pdpf=a×dvol+b)BY LEAST-SQUARE METHOD — S215

CALCULATE ABNORMALITY DETERMINATION UPPER LIMIT THRESHOLD VALUE Thh AND ABNORMALITY DETERMINATION LOWER LIMIT THRESHOLD VALUE Thl — S216

S217
COEFFICIENT a≦ABNORMALITY DETERMINATION LOWER LIMIT THRESHOLD VALUE Thl? — NO

YES

S219
ABNORMALITY DETERMINATION UPPER LIMIT THRESHOLD VALUE Thh<COEFFICIEN a ? — NO

YES

ABNORMAL (DPF DETERIORATION) — S218    ABNORMAL (DPF BLOCK) — S220    NORMAL — S221

END

## FIG.9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S57159519 B
- EP 1849972 A
- JP 2003155920 A